# EUROPÄISCHE PATENTANMELDUNG

(11) **EP 4 763 784 A1**
(43) Veröffentlichungstag der Anmeldung: **24.06.2026**
(21) Anmeldenummer: 25225107.9
(22) Anmeldetag: 18.12.2025
(51) Int. Cl.: B66B 11/02, B66F 7/14, B62H 3/12

(54) **AUFZUGSKABINE MIT VORRICHTUNG ZUM ZWEIRADTRANSPORT**

(30) Priorität: 19.12.2024 DE 102024139022
(71) Anmelder: osma GmbH & Co. KG, 49084 Osnabrück (DE)
(72) Erfinder: Verschoore, Marten, 55122 Mainz (DE); Wischmeier, Detlef, 49088 Osnabrück (DE); Dr. Weber, Ralf, 47259 Duisburg (DE)
(74) Vertreter: Weeg, Thomas

(57) **Zusammenfassung**

Die vorliegende Erfindung bezieht sich auf eine Aufzugskabine (2) mit einer Vorrichtung (14) zum Transport eines Zweirads (22), die Vorrichtung (14) zum Transport eines Zweirads (22) weist ein Halteelement (16) zur Verbindung mit einem Zweiradbauteil (24) während des Transports in der Aufzugskabine (2) auf, das Halteelement (16) ist mit einer Fördervorrichtung (18) verbunden, über die das Halteelement (16) zwischen einer in vertikaler Richtung tieferen Be- und Entladeposition (26) und einer erhöhten Transportposition (28) hin und her höhenverstellbar ist, und die Fördervorrichtung (18) ist motorisch angetrieben.

Um den Antrieb der Vorrichtung (14) zu verbessern, wird vorgeschlagen, dass die Fördervorrichtung (18) als elektrischer Linearantrieb ausgestaltet ist.

## Beschreibung

Die vorliegende Erfindung bezieht sich auf eine Aufzugskabine mit einem Bodenteil, Seitenwänden, zumindest einer Kabinentür, einer Deckenkonstruktion und einer Vorrichtung zum Transport eines Zweirads, die Vorrichtung zum Transport eines Zweirads weist ein Halteelement zur Verbindung mit einem Zweiradbauteil während des Transports in der Aufzugskabine auf, das Halteelement ist mit einer Fördervorrichtung verbunden, über die das Halteelement zwischen einer in vertikaler Richtung tieferen Be- und Entladeposition und einer erhöhten Transportposition hin und her höhenverstellbar ist, und die Fördervorrichtung ist motorisch angetrieben.

Mit der stärkeren Verbreitung von elektrisch angetriebenen Fahrrädern als ein Beispiel für Zweiräder steigt auch der Bedarf, diese bei Nichtgebrauch sicher unterbringen zu können. Um Zweiräder besser vor Diebstahl zu schützen, wächst zunehmend der Wunsch, das Fahrrad im Keller eines Hauses oder in der Wohnung, auch und insbesondere in Mehrfamilienhäusern, aufbewahren zu können. Aufgrund des hohen Gewichts insbesondere von elektrisch angetriebenen Zweirädern ist ein Transport über die Treppe in den meisten Fällen zu schwer, sie sind auch zu sperrig. Soweit ein Aufzug in einem Gebäude vorhanden ist, kann dieser wegen seiner geringen Innenmaße häufig auch nicht als Transportmittel für Fahrräder genutzt werden. Personenaufzüge sind in der Regel für den Transport von Personen entwickelt und nicht für den Transport von großen, sperrigen und schweren Gegenständen wie Fahrrädern.

Aus der Schrift CN 107010515 A ist eine gattungsgemäß ausgestattete Aufzugskabine bekannt. Die Aufzugskabine verfügt über eine Vorrichtung zum Transport eines Zweirads, insbesondere eines Fahrrads. Da ein herkömmliches Fahrrad eigentlich zu lang ist, um in Längs- oder Querrichtung in eine für den Personentransport ausgelegte Aufzugskabine zu passen, ist in der Aufzugskabine ein Halteelement vorgesehen, mit dem das Fahrrad an seinem vorderen Ende verbunden wird, damit dann das Halteelement zusammen mit dem ersten Ende des Fahrrads mittels einer von einem Antriebsmotor angetriebenen Fördereinrichtung nach oben gezogen wird. Bei dieser Förderbewegung wird das dem ersten Ende entgegengesetzte zweite Ende des Fahrrads in die Aufzugskabine hineingezogen. Durch die bei der Förderbewegung von der Horizontalen in eine Schräglage oder eine vertikale Lage übergehende räumliche Ausrichtung der Längsachse des Fahrrads verkleinert sich das Längenmaß, über das sich das Fahrrad in horizontaler Richtung im Inneren der Aufzugskabine erstreckt, so sehr, dass nun die Kabinentür auch von einer eigentlich zu klein bemessenen Aufzugskabine geschlossen werden kann.

Bei der anschließenden Fahrt des Aufzugs kann auch eine Aufzugskabine, deren innere Längen- und Breitenmaße kleiner sind als die Länge eines Fahrrads für erwachsene Menschen, nun ein solches Fahrrad aus einer tieferen Etage des Gebäudes in eine höhere Etage schaffen oder umgekehrt. Die Lösung ermöglicht einen raumeffizienten Transport von Fahrrädern in Personenaufzügen mit möglichst kleinen Baugrößen. Es können auch noch Passagiere trotz Fahrrad in der Kabine sicher mitfahren, ohne dabei einer Verletzungsgefahr durch ein umfallendes Fahrrad ausgesetzt zu sein. Zudem ist das Risiko von Beschädigungen und einer erhöhten Abnutzung der Kabine reduziert. Da die Fördervorrichtung motorisch angetrieben ist, bleibt der Kraftaufwand für die Person, die das Fahrrad in die Aufzugskabine einstellt, gering.

Die aus dem Stand der Technik vorbekannte Fördereinrichtung überträgt die Antriebskraft des Antriebsmotors mit einem Seilzug auf die Fördervorrichtung. Ein solcher Seilzugantrieb wird als nachteilig angesehen, weil er störungsanfällig ist. Das Seil kann an den Anbindungspunkten abreißen, es kann Wickelfehler geben, und es ist nicht biegesteif, sodass es keine Antriebskraft auf das Halteelement ausüben kann, wenn eine Abwärtsbewegung des Halteelements gestört wird, beispielsweise durch eine Verklemmung in seinen Führungen.

Es ist die Aufgabe der vorliegenden Erfindung, den motorischen Antrieb der Fördervorrichtung zu verbessern.

Die Aufgabe wird für eine gattungsgemäße Aufzugskabine gelöst, indem die Fördervorrichtung als elektrischer Linearantrieb ausgestaltet ist.

Die Vorrichtung zum Transport eines Zweirads weist ein Halteelement zur Verbindung mit einem Zweiradbauteil während des Transports in der Aufzugskabine auf. Das Halteelement hält das Zweirad während einer Fahrt der Aufzugskabine durch den Aufzugschacht in einer Transportstellung. Um das Zweirad in der Aufzugskabine transportieren zu können, wird es zunächst in die Aufzugskabine geschoben oder getragen, um sodann ein Zweiradbauteil an dem Halteelement zu befestigen. So kann beispielsweise das Vorderrad oder die Lenkstange mit dem Halteelement verbunden werden. Die Verbindung ist dabei so ausgestaltet, dass sich das Zweiradbauteil nicht selbsttätig wieder vom Halteelement lösen kann. Das Halteelement kann zu diesem Zweck so ausgestaltet sein, dass sich damit eine formschlüssige oder kraftschlüssige Verbindung des Halteelements mit einem Zweiradbauteil herstellen lässt. Das Halteelement kann beispielsweise als Haken ausgebildet sein, an den ein Zweiradbauteil eingehängt wird. Das Halteelement kann auch einen Spanngurt aufweisen, der um ein Zweiradbauteil herumgelegt und gespannt wird. Das Halteelement kann auch Klemmbacken aufweisen, die miteinander verspannt werden, um das Zweiradbauteil kraft- und/oder formschlüssig im Halteelement festzulegen. Andere geeignete Ausgestaltungen des Halteelements sind möglich.

Wenn das Zweiradbauteil mit dem Halteelement verbunden ist, kann das Halteelement mit der Fördervorrichtung nach oben gefahren werden. Da das Halteelement mit dem Zweiradbauteil verbunden ist, wird dabei der mit dem Halteelement verbundene Teil des Zweirads mit angehoben, wobei das Zweirad in die Aufzugskabine hineingezogen wird. Da ein Zweirad in der Regel eine größere Länge als Bauhöhe aufweist, verringert sich dessen Länge in horizontaler Richtung umso mehr, je steiler das Zweirad vom Halteelement in einem Anstellwinkel im Verhältnis zur horizontalen Lage des Zweirads gehalten ist. Je weiter das Halteelement hochgefahren wird, umso steiler wird der Anstellwinkel, in dem sich das Zweirad dabei befindet. Gleichzeitig verkürzt sich dabei aber auch zunehmend die Länge des Zweirads in horizontaler Richtung, mit der es in der Aufzugskabine gehalten ist. Zweckmäßig wird das Zweirad mit dem Halteelement mindestens so weit nach oben gefahren, wie es erforderlich ist, um die Kabinentür schließen zu können. Im Extremfall kann ein Zweirad mit dem Halteelement aus einer horizontalen Lage in eine vertikale Lage um 90° um seine Querachse gedreht werden, wonach dann die Erstreckung des Zweirads in horizontaler Richtung in der Aufzugskabine von dem Maß seiner Länge auf das Maß seiner Bauhöhe reduziert ist. Nach oben hin wird eine Verfahrbewegung des Halteelements natürlich von der Höhe der Deckenkonstruktion der Aufzugskabine begrenzt.

Wird die Hochfahrbewegung des Halteelements gestoppt, bleibt das Zweirad vom Halteelement festgehalten. Der Stopp kann erst in der Endlage des Halteelements erfolgen. Wenn das Zweirad aber auch schon vollständig im Innenraum der Aufzugkabine steht, wenn das Halteelement noch nicht seine obere Endstellung erreicht hat, kann das Halteelement auch früher stoppen. Bei einem Stopp des Halteelements befindet sich das Zweirad in einer fixen Lage innerhalb der Aufzugskabine. Bei einer anschließenden Transportfahrt der Aufzugskabine kann das Zweirad deshalb nicht herunterfallen und dabei Personen verletzen, die sich in der Aufzugskabine befinden, und/oder die Wände der Aufzugskabine beschädigen. Je nachdem, wie groß die Grundfläche der Aufzugskabine bemessen ist, können bei der Transportfahrt der Aufzugskabine noch ein oder mehrere Personen mitfahren. Wenn sich in der Aufzugskabine mehrere Vorrichtungen zum Transport eines Zweirads befinden, können bei einer Transportfahrt der Aufzugskabine auch mehrere Zweiräder und gegebenenfalls auch zusätzlich noch weitere Personen mitgenommen werden.

Wenn bei einer Transportfahrt die Zielstation erreicht ist, muss zunächst die Kabinentür wieder geöffnet werden, bevor das Halteelement wieder nach unten gefahren wird, da sich bei einem Absenken des Halteelements durch den dabei geringer werdenden Anstellwinkel, mit dem das Zweirad in der Aufzugskabine gehalten ist, dessen Länge in horizontaler Richtung wieder vergrößert und dabei die Gefahr besteht, dass die Länge, die das Zweirad dabei einnimmt, die maximalen Innenmaße der Aufzugskabine erreicht und das Zweirad dadurch in der Aufzugskabine eingeklemmt wird. Je nach Antriebskraft der Fördervorrichtung könnte bei einer weiter fortgesetzten Absenkbewegung auch das Zweirad und/oder eine Innenwand der Aufzugskabine beschädigt werden. Durch die geöffnete Kabinentür kann sich bei einer fortgesetzten Absenkungsbewegung des Halteelements ein Teil des Zweirads aus dem Innenraum der Aufzugskabine herausbewegen. Wenn das Halteelement ausreichend weit nach unten bewegt worden ist, kann das mit dem Halteelement verbundene Zweiradbauteil vom Halteelement gelöst und das Zweirad aus der Aufzugskabine herausbewegt werden.

Durch den motorischen Antrieb der Fördervorrichtung für das Halteelement können auch schwerere Zweiräder mühelos mit der Vorrichtung angehoben und wieder heruntergelassen werden. Der motorische Antrieb, die Fördervorrichtung und das Halteelement können auf übliche Gewichte ausgelegt sein, die beim Anheben auch schwerer Zweiräder auftreten. So wiegt eine E-Bike etwa 20 - 30 kg, und eine Vorrichtung, die auf ein Gewicht von 35 kg einschließlich eines Sicherheitszuschlags ausgelegt ist, würde für den Anwendungszweck ausreichen, zumal das Zweirad bevorzugt nur so weit angehoben wird, dass das dem Halteelement abgewandte Ende eines E-Bikes noch auf dem Kabinenboden abgestützt bleibt, damit das Zweirad nicht gänzlich ohne Bodenkontakt frei in der Luft hängt. Es ist natürlich auch möglich, die Vorrichtung auch auf eine höhere Traglast auszulegen, beispielsweise 50, 100 oder 150 kg, so dass die Vorrichtung auch zum Anheben von anderen schwereren Gegenständen genutzt werden kann, die mit der Aufzugskabine innerhalb eines Gebäudes transportiert werden sollen.

Die Fördervorrichtung ist als elektrischer Linearantrieb ausgestaltet. Elektrische Linearantriebe sind aus verschiedenen Gründen vorteilhaft. Die Verwendung von elektrischer Energie als Antriebsenergie für eine in einer Aufzugskabine platzierte Vorrichtung ist vorteilhaft, weil in Aufzugskabinen eine Stromversorgung sowieso für die Beleuchtung, Türantriebe und Steuerungselektronik vorhanden ist. Die vorhandene Energieversorgung kann also ohne eine Umwandlung in andere Energieformen direkt genutzt werden.

Die Verwendung eines Linearantriebs ist vorteilhaft, weil das Halteelement nur in einer translatorischen Bewegung zwischen einer in vertikaler Richtung tieferen Be- und Entladeposition und einer erhöhten Transportposition hin und her bewegt werden muss. Ein Linearantrieb ist technisch darauf ausgelegt, genau eine solche translatorische Bewegung auszuführen. Elektrische Linearantriebe wirken bidirektional, sie sind druck- und zugfest und bewegen also das Halteelement mit einer kontrollierten Bewegung sowohl aufwärts als auch abwärts. Die Bewegungsgeschwindigkeit des Halteelements ist dabei gut kontrollierbar, ruckartige Beschleunigungen und Bremsvorgänge können vermieden werden. Elektrische Linearantriebe können in kompakten geschlossenen Gehäusen angeordnet werden, wodurch Benutzer der Vorrichtung und der Aufzugskabine gut gegen Verletzungsrisiken geschützt sind, die sich aus bewegten angetriebenen Teilen ergeben. Elektrische Linearantriebe können als Fördervorrichtung auch gut in ein Ausstattungsmodul integriert werden, das wahlweise in eine Aufzugskabine eingebaut wird, wenn die Aufzugskabine eine Vorrichtung zum Transport von Zweirädern aufweisen soll.

Elektrische Linearantriebe gibt es in verschiedenen Ausführungen. Sie können beispielsweise als Zahnstange, Schubkette, Kurvenscheibe, Piezomotor, Faltspindel, Gewindespindel, Elektrozylinder, Kugelgewindetrieb, Rollengewindetrieb oder als elektromechanischer Linearantrieb ausgebildet sein. Elektrische Linearantriebe arbeiten auf dem Prinzip der elektromagnetischen Kraftwirkung. Ein besonderes Merkmal dieser Linearführungen und -antriebe ist ein Lauf mit geringer Reibung und das Vermögen, Querkräfte aufzunehmen, ohne dadurch wesentlich verformt zu werden. Die Linearantriebe sind dadurch besonders laufruhig, wartungsarm und zuverlässig. Sie haben eine lange Lebensdauer und beanspruchen nur einen vergleichsweise geringen Bauraum.

Die Auswahl und Dimensionierung von Linearantrieben hängen von der jeweiligen Anwendung ab. Die wichtigsten Faktoren, die berücksichtigt werden müssen, sind die Last, die zu bewegen ist, die gewünschte Geschwindigkeit, die Beschleunigung, die erforderliche Positioniergenauigkeit und die Umgebungsbedingungen wie Temperatur und Feuchtigkeit. Unter Berücksichtigung dieser Aspekte kann aus den vorgenannten Beispielen ein geeigneter elektrischer Linearantrieb zur Bewegung des Halteelements in der Aufzugskabine und das Halten des Zweirads während dessen Transport in der Aufzugskabine ausgewählt werden.

Nach einer Ausgestaltung der Erfindung sind die Fördervorrichtung, das Halteelement und der motorische Antrieb in einem gemeinsamen Gehäuse angeordnet. Ein solches gemeinsames Gehäuse ist montagefreundlich, da nur das Gehäuse in einer Aufzugskabine montiert und die elektrischen Anschlüsse hergestellt werden müssen. Die im gemeinsamen Gehäuse angeordneten Komponenten können separat anschlussfertig vormontiert werden.

Nach einer Ausgestaltung der Erfindung ist als Fördervorrichtung ein Spindelantrieb verwendet. Bei dem Spindelantrieb wird die Verstellkraft vom Antriebsmotor auf das Halteelement mit einer drehbeweglich bleibenden Schraube-Mutter-Verbindung übertragen. Die Schraube, die auch als Schneckenwelle oder Gewindespindel bezeichnet werden kann, ist dabei drehbar, jedoch axial fixiert, und die Mutter ist mit dem Halteelement verbunden und linear verschieblich in einem Gestell gelagert. Verbunden sind beide über ein Bewegungsgewinde. Die Schraube oder Gewindespindel wird von der Schraube mit Innengewinde umschlossen. Wird die Schraube gedreht, verlagert sich die mit der Schraube über ihr Innengewinde verbundene Mutter und damit das Halteelement je nach Drehrichtung der Schraube nach oben oder unten, wenn die Schraube in einer zumindest überwiegend oder genau vertikalen Richtung ausgerichtet ist. Spindelantriebe sind besonders laufruhig und benötigen wenig Bauraum, der insbesondere in Aufzugskabinen knapp ist. Die Gewindestange mit dem zugehörigen Antriebsmotor und dem Gestell, das die Führungskulisse für die Mutter mit dem daran befestigten Halteelement bildet, können als eine kompakte Baueinheit an der Seitenwand der Aufzugskabine befestigt werden. Über die Länge der Gewindestange ergeben sich ausreichend lange Verstellwege für das Haltelement. Die für die Vorrichtung benötigten Bauteile können kostengünstig hergestellt werden.

Nach einer Ausgestaltung der Erfindung ist der Spindelantrieb selbsthemmend ausgelegt. Selbsthemmung beschreibt in der Mechanik den durch Reibung verursachten Widerstand gegen ein Verrutschen oder ein Verdrehen zweier aneinander liegender Körper, bei dem Spindelantrieb also das Außengewinde der Schraube gegen das Innengewinde der Mutter. Sobald die Haftreibung überschritten ist, sind die Körper nicht mehr selbsthemmend. Die Selbsthemmung wird beeinflusst durch den Neigungswinkel der Gewinde, die Oberflächenrauigkeit der Auflageflächen der Gewinde, die Werkstoffpaarung, den Schmierstoff und die Erwärmung der Bauteile. Bei einer selbsthemmenden Auslegung des Spindelantriebs kann auf Kupplungen und Bremsen im Antriebsstrang vom Antriebsmotor zur Gewindestange verzichtet werden, was den Antrieb vereinfacht und kostengünstiger macht. Um Selbsthemmung zu erreichen, wird der resultierende Winkel kleiner als der Arcustangens der Haftreibungszahl ausgeführt. Ein solcher selbsthemmend ausgelegter Spindelantrieb ist widerstandsfähig gegen eine Lockerung der Verbindung bei dynamisch wechselnden äußeren Beanspruchungen durch Schwingungen, die im Betrieb der Aufzugskabine auftreten können. Bei Schwingungen und Stößen, die auf die Aufzugskabine einwirken können, bleibt das Halteelement auch bei größeren anhängenden Lasten in seiner eingestellten Position. Ist der Antriebsmotor ausgeschaltet, ist auch die rotierende Bewegung der Gewindestange gestoppt. Nach dem Stopp der Gewindestange bleibt das Halteelement in der eingestellten Höhe selbst dann stehen, wenn das Halteelement mit einem hohen Gewicht belastet ist, weil sich das Innengewinde der Mutter und das Gewinde der Gewindestange über die Haftreibung gegenseitig gegen eine weitere Drehung der Gewindestange hemmen. Der Antrieb der Vorrichtung ist eigensicher und somit hat eine hohe Betriebssicherheit. Da auf verschleißbehaftete Komponenten wie Kupplungen und Bremsen verzichtet werden kann, ist ein solcher Antrieb besonders wartungsarm und hat eine lange Nutzungsdauer.

Nach einer Ausgestaltung der Erfindung ist das Halteelement um eine zumindest annähernd vertikal ausgerichtete Schwenkachse verschwenkbar und/oder in seiner Erstreckungsrichtung teleskopierbar. Bei einem verschwenkbar und/oder in seiner Erstreckungsrichtung teleskopierbar ausgestalteten Halteelement ist die Verbindung mit einem Zweiradbauteil leichter herstellbar, weil nicht das schwere Zweirad genau zum Halteelement positioniert werden muss, wenn diese miteinander verbunden werden sollen, sondern das Halteelement in die Richtung des Zweirads geschwenkt und ausgezogen werden kann, wenn die Positionierung noch nicht optimal ist. Wenn das Zweirad mit dem Halteelement verbunden ist und daran hängt, kann das Zweirad durch eine Verschwenk- und/oder Ausziehbewegung des Halteelements auch in eine Position gebracht werden, in der es im Innenraum der Aufzugskabine am wenigsten stört. Es kann insbesondere in eine Position geschwenkt werden, in der möglichst viel Grundfläche und Innenraumvolumen für anderes Transportgut, wie beispielsweise mitfahrende Personen, zur Verfügung steht. Über die Verschwenk- und/oder Ausziehbewegung des Halteelements kann dieses auch an unterschiedliche Baugrößen eines zu transportierenden Zweirads angepasst werden. Der Gebrauchsnutzen wird durch die Verschwenkbarkeit und/oder Teleskopierbarkeit des Halteelements deutlich gesteigert. Für die Verschwenk- und/oder Teleskopfunktion kann eine Verriegelung vorgesehen sein, beispielsweise, um ein am Halteelement hängendes Zweirad in seiner räumlichen Lage zu stabilisieren. Die Verriegelung ist auf eine einfache Weise durch eine Schiebemuffe, Sperrklinken, eine Verrastung oder ähnliche Mittel möglich. Wenn das Halteelement nicht für den Zweiradtransport benötigt wird, kann es auch aus einer in den Innenraum ragenden Stellung an die Seitenwand verschwenkt werden, um den regulären Gebrauch der Aufzugskabine ohne einen Transport von Zweirädern möglichst wenig zu beeinträchtigen.

Nach einer Ausgestaltung der Erfindung ist das Halteelement als Bügel oder Blech, profiliert oder gerade und mit oder ohne ein zusätzliches Sicherungsmittel ausgestaltet. Bei dieser Ausgestaltung kann die Verbindung zwischen dem Zweirad und dem Halteelement einfach hergestellt werden, beispielsweise, indem das Vorder- oder Hinterrad des Zweirads in das Halteelement eingehängt wird. Über ein Klett- oder Ratschenband als zusätzlichem Sicherungsmittel kann das Zweirad am Halteelement festgelegt werden. Das Halteelement ist in dieser Ausführung kostengünstig herstellbar.

Nach einer Ausgestaltung der Erfindung ist zwischen dem Antriebsmotor und der Fördervorrichtung eine Überlastsicherung angeordnet. Die Überlastsicherung kann beispielsweise als Rutschkupplung, Bajonettkupplung, Scherbolzenkupplung oder dergleichen ausgestaltet sein. Die Überlastsicherung verhindert eine Überlastung des Halteelements und der Fördervorrichtung und unterbricht die Antriebskraft, wenn es in der Fördervorrichtung eine technische Blockade geben sollte.

Nach einer Ausgestaltung der Erfindung ist die Vorrichtung mit einer Bedieneinheit verbunden. Die Bedieneinheit dient dazu, die Vorrichtung ein- und auszuschalten und das Halteelement nach oben oder unten zu fahren. Die Bedieneinheit dient dazu, die Auf- und Abwärtsbewegung des Halteelements zu steuern. Die Bedieneinheit kann mit einem Taster verbunden sein, mit dem der Antrieb ein- und/oder ausgeschaltet wird. Der Taster kann auch nach Art des Totmannprinzips geschaltet sein, so dass der Antrieb nur solange eingeschaltet bleibt, wie auch der Taster gedrückt gehalten wird.

Nach einer Ausgestaltung der Erfindung wird die Auf- und Abwärtsbewegung des Halteelements manuell über einen mit der Bedieneinheit verbundenen Taster gesteuert, wobei der Taster mit einer Steuerung verbunden ist, die den Antrieb zeitgesteuert und/oder in Abhängigkeit von einem Überlastsignal abschaltet. Die Abschaltung kann als Endabschaltung beispielsweise in Abhängigkeit von einem Überlastsignal erfolgen, wenn dieses beispielsweise aus einer Messung der Leistungsaufnahme des Antriebsmotors oder des Drehmoments der Gewindestange oder aus einem Signal eines Endanschlagsschalters generiert wird.

Nach einer Ausgestaltung der Erfindung ist die Bedieneinheit mit einer Legitimierungsvorrichtung verbunden. Die Legitimierungsvorrichtung kann als ein Schloss ausgebildet sein, das mit einem Schlüssel betätigt werden muss, um die Bedieneinheit frei- und wieder abzuschalten. Es ist auch möglich, die Legitimierungsvorrichtung elektronisch über ein Transpondersignal von einem Transponder, einem Bluetooth- oder NFC-Funksignal von einer Mobilfunk-Vorrichtung wie einer App von einem Smartphone oder dergleichen zu aktivieren und freizuschalten. Die Bedieneinheit kann auch mit einem Fingerabdrucksensor verbunden sein. Die Legitimierungsvorrichtung stellt sicher, dass die Vorrichtung nur von Personen benutzt wird, die dazu legitimiert sind. Ein Missbrauch der Vorrichtung von Personen, die sich nicht legitimieren können, wird dadurch verhindert.

Nach einer Ausgestaltung der Erfindung weist die Bedieneinheit eine Kommunikationsschnittstelle für eine Kommunikation mit der Aufzugsteuerung auf. Die Kommunikationsschnittstelle kann beispielsweise dazu vorgesehen sein, von der Aufzugssteuerung ein Signal zu erhalten, dass die Aufzugkabine mit einem Zweirad beladen werden soll, das zuvor von der Aufzugsteuerung erkannt oder dieser als Transportwunsch gemeldet worden ist, um die Bedieneinheit für Bedienvorgänge freizuschalten. Die Kommunikationsschnittstelle kann auch dazu genutzt werden, um aus der Lichtschranke der Kabinentürüberwachung ein Signal zu erhalten, dass die Kabinentür noch oder nicht mehr von dem in die Aufzugskabine einzuladenden Zweirad blockiert ist. Umgekehrt kann mit der Betätigung der Vorrichtung über die Bedieneinheit über die Kommunikationsschnittstelle an die Aufzugsteuerung ein Signal übermittelt werden, dass das Schließen der Kabinentür solange verhindert wird, bis die Fördervorrichtung ihre Endlage erreicht hat, oder die Aufzugssteuerung angeforderte Zwischenhalte an weiteren Aufzugstationen auf der nächsten Transportfahrt unterlässt, bis das Halteelement wieder in seine Be- und Entladeposition zurückgestellt worden ist.

Nach einer Ausgestaltung der Erfindung ist die Fördervorrichtung mittels einer Totmannsteuerung bedienbar. Bei einer Totmannsteuerung bewegt sich die Fördervorrichtung nur so lange, wie ein dafür vorgesehener Bedienknopf gedrückt gehalten wird. Die Fördervorrichtung setzt sich also nur dann in Bewegung, wenn der Bedienknopf gedrückt wird, und die Fördervorrichtung stoppt sofort die Förderbewegung, wenn der Bedienknopf losgelassen wird. Durch diese Bedienweise der Fördervorrichtung erhält ein Benutzer der Aufzugskabine eine unmittelbare Kontrolle über die Förderbewegung der Fördervorrichtung. Sollte das in die Fördervorrichtung eingehängte Zweirad während einer Förderbewegung drohen, zu kippen oder mit einer Person oder Teilen der Aufzugskabine zu kollidieren, wird die Fördervorrichtung durch Loslassen des Bedienknopfs unmittelbar gestoppt, ohne dass es dafür noch eines weiteren Bedienvorgangs bedarf. Ein Schreckimpuls, bei dem der Benutzer des Aufzugs seine Hand zurückzieht, stoppt also unmittelbar die Fördervorrichtung. Die Fördervorrichtung ist dadurch insgesamt sicherer betreibbar.

Weitere Merkmale der Erfindung ergeben sich aus den Ansprüchen, den Figuren und der Figurenbeschreibung. Alle vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen verwendbar, soweit dem keine technisch zwingenden Hindernisse entgegenstehen.

Die Erfindung wird nun anhand eines Ausführungsbeispiels sowie unter Bezugnahme auf die beigefügten Zeichnungen näher erläutert.

Es zeigen:
- Fig. 1:: eine Aufzugkabine mit einem eingestellten Zweirad in einer seitlichen Schnittansicht,
- Fig. 2:: die in Fig. 1 gezeigte Aufzugkabine mit einem angehobenen Zweirad,
- Fig. 3:: eine vergrößerte Darstellung der Vorrichtung zum Transport eines Zweirads in einer seitlichen Schnittansicht, und
- Fig. 4:: eine Querschnittansicht auf die in Fig. 1 gezeigte Aufzugkabine von oben.

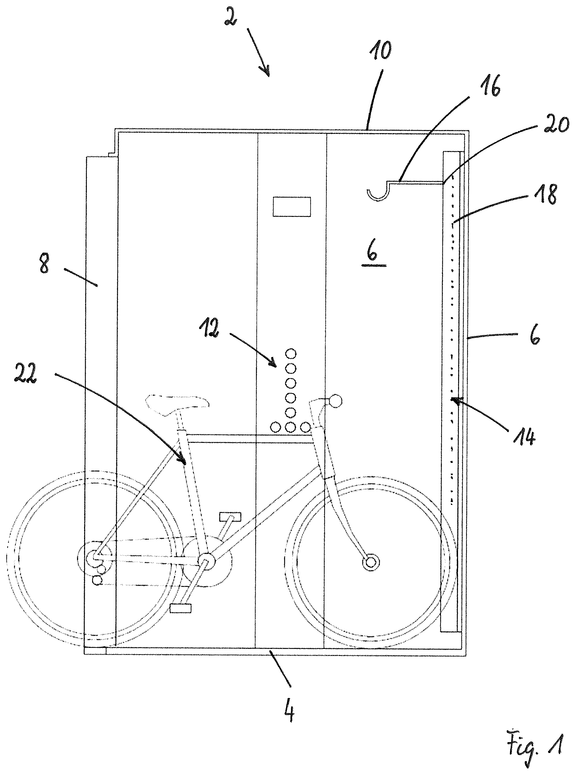

Die Fig. 1 zeigt eine Aufzugskabine 2 mit einem eingestellten Zweirad 22 in einer seitlichen Schnittansicht. Die Aufzugkabine 2 hat ein Bodenteil 4, Seitenwände 6, eine Kabinentür 8 und eine Deckenkonstruktion 10. An einer Seitenwand 6 befindet sich die Bedieneinheit 12. An eine andere Seitenwand 6 ist die Vorrichtung 14 zum Transport eines Zweirads 22 angebracht. Die Vorrichtung 14 ist im Ausführungsbeispiel mit der Bedieneinheit 12 verbunden, beispielsweise über ein Kabel oder über eine Funkverbindung. Die Vorrichtung 14 hat ein Halteelement 16, das mit einer in gestrichelter Linie angedeuteten Fördervorrichtung 18 in vertikaler Richtung aufwärts und abwärts beweglich ist. In der in Fig. 1 dargestellten Stellung befindet sich das Halteelement 16 in der Ruheposition 20. Das Halteelement 16 kann als Bügel oder Blech, profiliert oder gerade und mit oder ohne ein zusätzliches Sicherungsmittel ausgestaltet sein.

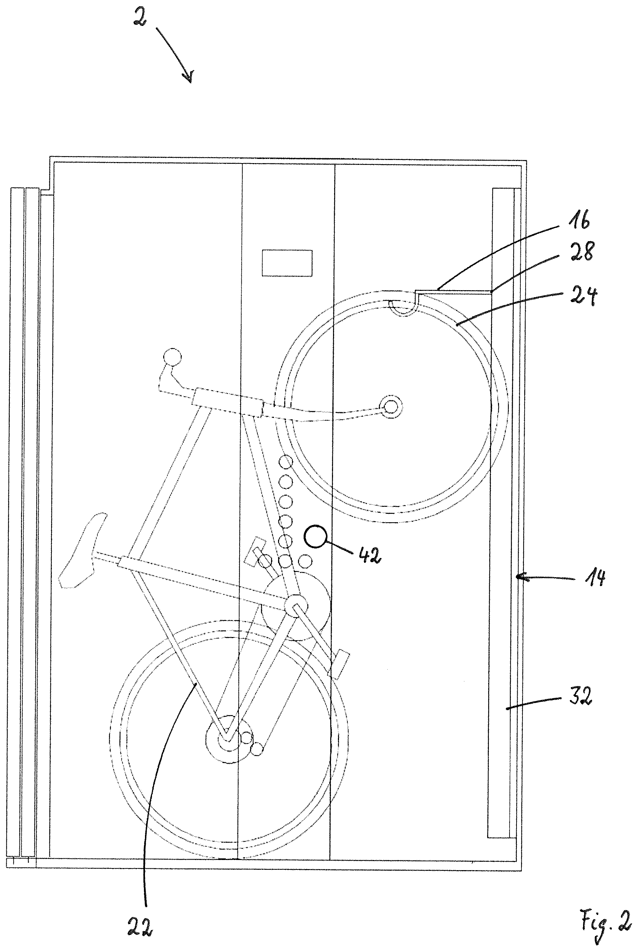

Wie aus der Fig. 1 erkennbar ist, weist das Zweirad 22 eine größere Länge auf als der Innenraum der Aufzugkabine 2. Wegen der größeren Länge des Zweirads 22 lässt sich die Kabinentür 8 nicht schließen. Die Fig. 2 zeigt die in Fig. 1 gezeigte Aufzugkabine 2 mit einem angehobenen Zweirad 22. Das Vorderrad des Zweirads 22 als ein Beispiel für ein Zweiradbauteil 24 ist in das Halteelement 16 eingehängt. Das Halteelement 16 ist aus einer unteren Be- und Entladeposition 26, die in der Fig. 2 nicht gezeigt ist, in die höhere Transportposition 28 bewegt worden. In der höheren Transportposition 28 kann das Zweirad 22 mit einer geschlossenen Kabinentür 8 mit der Aufzugskabine 2 aufwärts oder abwärts bewegt werden. Wie aus der Darstellung in Fig. 2 ersichtlich, ist das Vorderrad des Zweirads 22 mit dem Halteelement 16 so weit nach oben angehoben worden, dass das Zweirad 22 nun in den Innenraum der Aufzugkabine 2 hineinpasst. Das Zweirad 22 wird nun in dem gezeigten Ausführungsbeispiel in einem Anstellwinkel von etwa 65° zur Horizontalen vom Halteelement 16 gehalten.

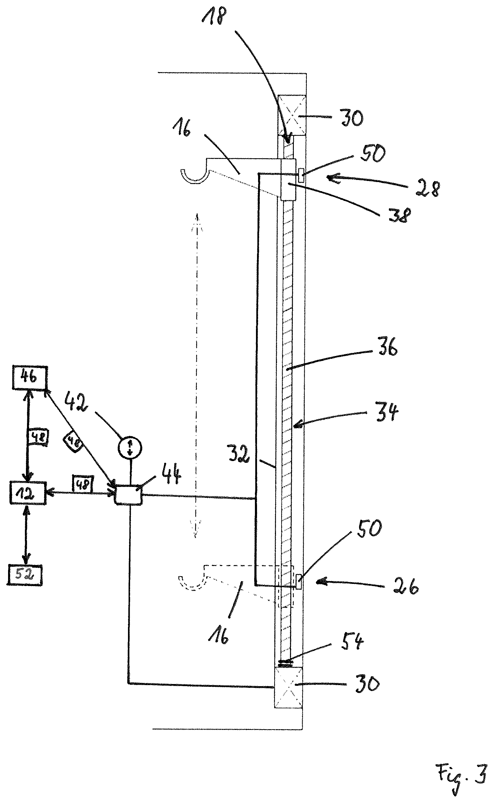

Die Vorrichtung 14 weist im Ausführungsbeispiel ein einziges Gehäuse 32 auf, in dem auch der in Fig. 3 gezeigte motorische Antriebsmotor 30 angeordnet ist. Für eine Vorrichtung 14 genügt ein einziger motorischer Antriebsmotor 30. In dem in Fig. 3 gezeigten Ausführungsbeispiel sind zwei Positionen dargestellt, an denen ein motorischer Antriebsmotor 30 angeordnet sein kann. Als Fördervorrichtung 18 wird in dem in Fig. 3 dargestellten Ausführungsbeispiel ein Spindelantrieb 34 verwendet. Der motorische Antriebsmotor 30 wirkt auf einen Spindelantrieb 34. Zwischen dem Antriebsmotor 30 und der Fördervorrichtung 18 ist eine Überlastsicherung angeordnet. Der Spindelantrieb 34 weist eine Gewindestange 36 auf, die mit dem Antriebsmotor 30 in eine drehende Bewegung versetzt werden kann. Der Spindelantrieb 34 ist durch entsprechend gewählte Steigungswinkel der Gewinde selbsthemmend ausgelegt. Auf die Gewindestange 36 ist eine Mutter 38 aufgesetzt, die einen Innengewinde aufweist. Da die Mutter 38 in einem Gestell geführt ist, das die Führungskulisse für die Mutter 38 mit dem daran befestigten Halteelement 16 bildet, dreht sich die Mutter 38 nicht mit der Gewindestange 36 mit, sondern behält ihre Drehstellung im Raum bei. Über das Innengewinde der Mutter 38 und das Außengewinde der Gewindestange 36 bewegt sich die Mutter 38 allerdings je nach Drehrichtung der Gewindestange 36 an der Gewindestange 36 entlang nach oben oder unten, wobei sich dann das mit der Mutter 38 fest verbundene Halteelement 16 nach oben oder unten mitbewegt. Die Gewindestange 36, die Mutter 38 und der Antriebsmotor 30 bilden zusammen eine Fördervorrichtung 18, die ein Beispiel für einen elektrischen Linearantrieb ist.

Die Auf- und Abwärtsbewegung des Halteelements 16 wird manuell über einen mit der Bedieneinheit 12 verbundenen Taster 42 gesteuert, wobei der Taster 42 mit einer Steuerung 44 verbunden ist, die den Antrieb zeitgesteuert und/oder in Abhängigkeit von einem Überlastsignal abschaltet. Ein Überlastsignal kann beispielsweise von den Sensoren 50 generiert werden. Bei den Sensoren 50 kann es sich aber beispielsweise auch um Endlagenschalter handeln, die ein Abschaltsignal an die Steuerung 44 übermitteln. Die Steuerung 44 kann über die Bedieneinheit 12 oder direkt mit der Aufzugsteuerung 46 verbunden sein. Dazu verfügt die Bedieneinheit 12 und/oder die Steuerung 44 über eine Kommunikationsschnittstelle 48 für eine Kommunikation mit der Aufzugsteuerung 46.Die Bedieneinheit 12 ist im gezeigten Ausführungsbeispiel mit einer Legitimierungsvorrichtung 52 verbunden.

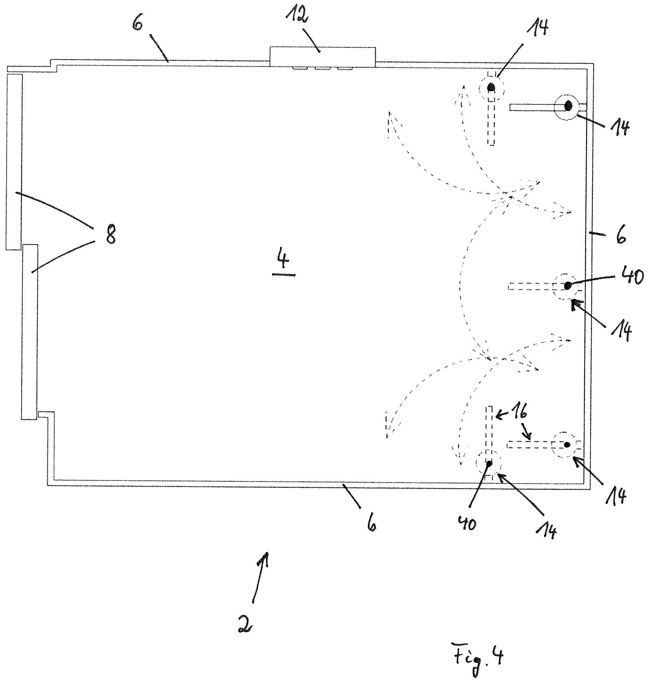

In Fig. 4 ist eine Querschnittansicht auf die in Fig. 1 gezeigte Aufzugkabine 2 von oben gezeigt. In dieser Ansicht sind beispielhaft fünf verschiedene Positionen dargestellt, an denen eine Vorrichtung 14 an einer Seitenwand 6 der Aufzugskabine 2 montiert werden kann. Es ist vorteilhaft, die Vorrichtungen 14 auf der der Kabinentür 8 gegenüberliegenden Seite der Aufzugskabine 2 anzuordnen. Die Halteelemente 16 der Vorrichtungen 14 sind jeweils um eine zumindest annähernd vertikal ausgerichtete Schwenkachse 40 verschwenkbar, wie durch die gestrichelten Doppelpfeile angedeutet ist. Die Halteelemente können auch in ihrer Erstreckungsrichtung teleskopierbar ausgestaltet sein.

Die Erfindung ist nicht auf das vorstehend beschriebene Ausführungsbeispiel beschränkt. Dem Fachmann bereitet es keine Schwierigkeiten, das Ausführungsbeispiel auf eine ihm geeignet erscheinende Weise abzuwandeln, um sie an einen konkreten Anwendungsfall anzupassen.

### Bezugszeichenliste

- 2: Aufzugskabine
- 4: Bodenteil
- 6: Seitenwand
- 8: Kabinentür
- 10: Deckenkonstruktion
- 12: Bedieneinheit
- 14: Vorrichtung zum Transport eines Zweirads
- 16: Halteelement
- 18: Fördervorrichtung
- 20: Ruheposition
- 22: Zweirad
- 24: Zweiradbauteil
- 26: Be- und Entladeposition
- 28: Transportposition
- 30: motorischer Antriebsmotor
- 32: Gehäuse
- 34: Spindelantrieb
- 36: Gewindestange
- 38: Mutter
- 40: Schwenkachse
- 42: Taster
- 44: Steuerung
- 46: Aufzugsteuerung
- 48: Kommunikationsschnittstelle
- 50: Sensor
- 52: Legitimierungsvorrichtung
- 54: Überlastsicherung

## Patentansprüche

1. Aufzugskabine (2) mit einem Bodenteil (4), Seitenwänden (6), zumindest einer Kabinentür (8), einer Deckenkonstruktion (10) und einer Vorrichtung (14) zum Transport eines Zweirads (22), die Vorrichtung (14) zum Transport eines Zweirads (22) weist ein Halteelement (16) zur Verbindung mit einem Zweiradbauteil (24) während des Transports in der Aufzugskabine (2) auf, das Halteelement (16) ist mit einer Fördervorrichtung (18) verbunden, über die das Halteelement (16) zwischen einer in vertikaler Richtung tieferen Be- und Entladeposition (26) und einer erhöhten Transportposition (28) hin und her höhenverstellbar ist, und die Fördervorrichtung (18) ist motorisch angetrieben, **dadurch gekennzeichnet, dass** die Fördervorrichtung (18) als elektrischer Linearantrieb ausgestaltet ist.

2. Aufzugskabine (2) nach Anspruch 1, **dadurch gekennzeichnet, dass** die Fördervorrichtung (18), das Halteelement (16) und der motorische Antriebsmotor (30) in einem gemeinsamen Gehäuse (32) angeordnet sind.

3. Aufzugskabine (2) nach Anspruch 1 oder 2, **dadurch gekennzeichnet, dass** als Fördervorrichtung (18) ein Spindelantrieb (34) verwendet ist.

4. Aufzugskabine (2) nach Anspruch 3, **dadurch gekennzeichnet, dass** der Spindelantrieb (34) selbsthemmend ausgelegt ist.

5. Aufzugskabine (2) nach einem der vorhergehenden Ansprüche, **dadurch gekennzeichnet, dass** das Halteelement (16) um eine zumindest annähernd vertikal ausgerichtete Schwenkachse (40) verschwenkbar und/oder in seiner Erstreckungsrichtung teleskopierbar ist.

6. Aufzugskabine (2) nach einem der vorhergehenden Ansprüche, **dadurch gekennzeichnet, dass** das Halteelement (16) als Bügel oder Blech, profiliert oder gerade und mit oder ohne ein zusätzliches Sicherungsmittel ausgestaltet ist.

7. Aufzugskabine (2) nach einem der vorhergehenden Ansprüche, **dadurch gekennzeichnet, dass** zwischen dem Antriebsmotor (30) und der Fördervorrichtung (18) eine Überlastsicherung (54) angeordnet ist.

8. Aufzugskabine (2) nach einem der vorhergehenden Ansprüche, **dadurch gekennzeichnet, dass** die Vorrichtung (14) mit einer Bedieneinheit (12) verbunden ist.

9. Aufzugskabine (2) nach Anspruch 8, **dadurch gekennzeichnet, dass** die Auf- und Abwärtsbewegung des Halteelements (16) manuell über einen mit der Bedieneinheit (12) verbundenen Taster (42) gesteuert wird, wobei der Taster (42) mit einer Steuerung (44) verbunden ist, die den Antrieb zeitgesteuert und/oder in Abhängigkeit von einem Überlastsignal abschaltet.

10. Aufzugskabine (2) nach einem der vorhergehenden Ansprüche 7 oder 8, **dadurch gekennzeichnet, dass** die Bedieneinheit (12) mit einer Legitimierungsvorrichtung (52) verbunden ist.

11. Aufzugskabine (2) nach den vorhergehenden Ansprüchen 8 und 9, 8 und 10 oder 8, 9 und 10, **dadurch gekennzeichnet, dass** die Steuerung (44) und/oder die Bedieneinheit (12) eine Kommunikationsschnittstelle (48) für eine Kommunikation mit der Aufzugsteuerung (46) aufweist.

12. Aufzugskabine (2) nach einem der vorhergehenden Ansprüche, **dadurch gekennzeichnet, dass** die Fördervorrichtung mittels einer Totmannsteuerung bedienbar ist.
